(19) Europäisches Patentamt
European Patent Office
Office européen des brevets

(11) **EP 3 502 737 A1**

(12) **EUROPEAN PATENT APPLICATION**

(43) Date of publication:
**26.06.2019 Bulletin 2019/26**

(51) Int Cl.:
**G01S 13/58** *(2006.01)*  **G01S 13/87** *(2006.01)*
**G01S 13/93** *(2006.01)*

(21) Application number: **18211311.8**

(22) Date of filing: **10.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2017 US 201715848251**

(71) Applicant: **NXP B.V.**
**5656 AG Eindhoven (NL)**

(72) Inventors:
• **LI, Liang**
**5656 AG Eindhoven (NL)**
• **TONG, Ziqiang**
**5656 AG Eindhoven (DE)**

(74) Representative: **Pomper, Till**
**NXP Semiconductors**
**Intellectual Property Group**
**134 avenue Eisenhower**
**BP 72329**
**31023 Toulouse Cedex 1 (FR)**

(54) **TRUE VELOCITY VECTOR ESTIMATION**

(57) Embodiments are provided herein for a radar system and a method for determining true velocity, which includes: obtaining a first radial velocity component that corresponds to a target object, based on sensor data detected by a first radar sensor on a vehicle; obtaining a second radial velocity component that corresponds to the target object, based on sensor data detected by a second radar sensor on the vehicle; and calculating a true velocity vector of the target object based on a trigonometric relationship established between the first radial velocity component and the second radial velocity component.

FIG. 3

EP 3 502 737 A1

**Description**

<u>Background</u>

<u>Field</u>

This disclosure relates generally to radar systems, and more specifically, to determining a true velocity vector of a target object detected in a radar system.

<u>Related Art</u>

Vehicles are often equipped with electronic control systems to assist drivers in controlling the vehicle. Such systems may include radio frequency (RF) radar systems that detect objects in the surrounding environment of the vehicle. It is important that RF radar systems are able to detect the velocity of objects quickly, especially for collision avoidance. However, many RF radar systems presently use temporal regression analysis techniques for estimating the velocity of an object detected by a single radar sensor, which combines measurements over several radar frames to interpolate the velocity. This detection time may be long when compared with real time changes in object velocity, and may result in inaccurate object velocity being detected by the radar system, which can be especially disastrous in an automotive environment.

<u>Brief Description of the Drawings</u>

The present invention may be better understood, and its numerous objects, features, and advantages made apparent to those skilled in the art by referencing the accompanying drawings.

FIG. 1 is a block diagram depicting an example radio frequency (RF) radar system implementing a true velocity vector calculator according to some embodiments of the present disclosure.

FIG. 2 and 3 are block diagrams depicting example radar detection of a target object according to some embodiments of the present disclosure.

FIG.4 and 5 are block diagrams depicting example trigonometric relationships established among detected radial velocity components and a true velocity vector of the target object according to some embodiments of the present disclosure.

FIG. 6 and 7 are block diagrams depicting example locations of radar sensors on a vehicle, according to some embodiments of the present disclosure.

FIG. 8 is a flowchart diagram depicting an example process for determining a true velocity vector of a target object, according to some embodiments of the present disclosure.

FIG. 9 is a block diagram illustrating relevant components of an example computing device in which a true velocity vector calculator can be implemented, according to one embodiment of the present disclosure.

The present invention is illustrated by way of example and is not limited by the accompanying figures, in which like references indicate similar elements, unless otherwise noted. Elements in the figures are illustrated for simplicity and clarity and have not necessarily been drawn to scale.

<u>Detailed Description</u>

The following sets forth a detailed description of various embodiments intended to be illustrative of the invention and should not be taken to be limiting.

<u>Overview</u>

In advanced driver assistance systems (ADAS), a velocity estimation of moving objects in the vicinity of a vehicle is an essential system requirement. However, the true velocity vector of an object cannot be measured directly by a radar sensor of a radio frequency (RF) radar system. Instead, the radar sensor determines a radial component of the object's true velocity vector, also referred to as a radial velocity component, in a radial direction toward or away from the radar sensor. The classic method for estimating the true velocity vector of an object is a temporal filter, such as a Kalman filter that implements temporal regression analysis. The Kalman filter takes several of the radar sensor's instantaneous measurements of the radial velocity component over a period of several radar frames to estimate the object's true velocity vector, since the changes in the object's position and direction can be seen over time. The Kalman filter also requires several radar frames to settle, which results in a start latency of a couple hundred milliseconds. As ADAS becomes more advanced, there is a desire to determine accurate velocity within a single radar frame, such as within 40 to 50 milliseconds.

The present disclosure provides a real-time true velocity vector estimation solution in an RF radar system, which calculates a magnitude and angle of a true velocity vector of an object within a single radar frame using two or more radar sensors. Each radar sensor is used to obtain a respective instantaneous measurement of a target object's radial velocity component at a same time, where the measurement includes a magnitude of the radial velocity component and angle information about the location of the target object relative to the radar sensor. The target object may be located in an overlapping portion of the detection fields of two or more neighboring or adjacent radar sensors. A true velocity vector calculator uses a trigonometric relationship established between the radial velocity components and the unknown true velocity vector (e.g., based on right triangle relationships between each radial velocity component and the unknown true velocity vector) to determine an angle of the true velocity vector relative to the radial velocity components and a magnitude of the true velocity vector. The proposed solution may estimate the target object's true velocity vector using instantaneous measurements obtained at a same time (e.g., a triggering moment) by the radar sensors, and performs the true velocity vector calculations within the time of one radar frame (e.g., typically less than 50 milliseconds), which is much shorter than conventional temporal regression analysis techniques (e.g., greater than hundreds of milliseconds) and provides a more accurate estimation of the true velocity of the object. The two radar sensors are not required to be RF coherent in the RF frequency (e.g., GHz range) but only need coherence in the triggering moment (e.g., 25Hz).

Example Embodiments

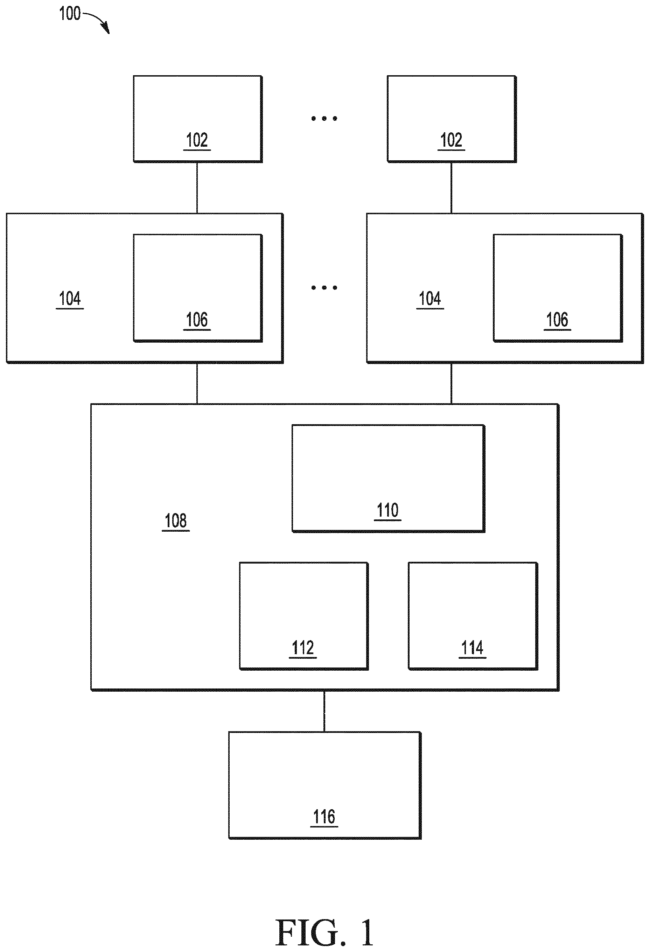

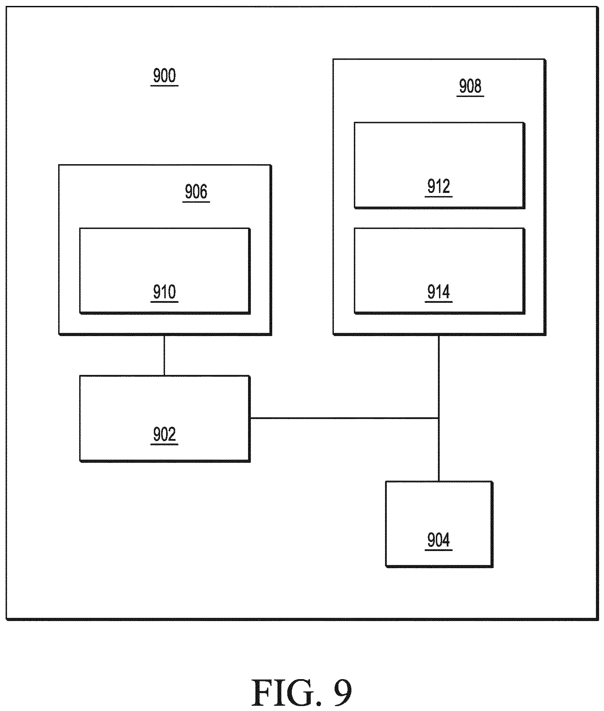

FIG. 1 is a block diagram depicting an example radio frequency (RF) radar system 100 that implements a true velocity vector calculator 110, as further discussed below. RF radar system 100 may be implemented in a vehicle and may be configured to use RF signals to determine information about the environment surrounding the vehicle. In the embodiments discussed herein, RF radar system 100 may implement a frequency modulated continuous wave (FMCW) radar scheme, such as using a chirp signal having a periodic function (e.g., sinusoidal, sawtooth) with ramping (e.g., increasing or decreasing) frequency that can be used to measure both velocity and distance, or may implement other radar schemes that can be used to measure velocity in other embodiments. RF radar system 100 includes two or more radar sensors 102, a local radar processor 104 communicatively coupled to a respective radar sensor 102, and a master radar processor 108 communicatively coupled to all local radar processors 104. In some embodiments, the functionality of the master radar processor 108 may be implemented on one of the local radar processors 104. In some embodiments, a single processor is used to implement the master radar processor 108 and one or more (or all) of the local radar processors 104, which may be implemented using a computing device like that shown in FIG. 9. The components of FIG. 1 are further discussed below.

Each radar sensor 102 is configured to detect objects in a surrounding environment. Each radar sensor 102 includes an RF front-end block, which implements front end components of a transceiver (which may include both a transmitter circuit and a receiver circuit) for transmitting and receiving RF signals via at least one antenna. In some embodiments, a single antenna with a coupling device may be used to switch between a transmitter and a receiver of the RF front-end block, while other embodiments may use a dedicated transmitting antenna and a dedicated receiving antenna. The front-end components may include but are not limited to a transmitter power amplifier, a receiver low noise amplifier, one or more baluns, one or more filters, a circulator or other coupling device to the antenna, impedance matching elements, a local oscillator, a phase locked loop, a resonance and bandwidth circuit (e.g., one or more resistors and capacitors), control logic, and other appropriate front-end elements.

During functional operation of the radar system 100, each radar sensor 102 drives an output signal (e.g., a chirp signal, or other RF signal depending on the radar scheme implemented) on a transmitting (Tx) antenna, which backscatters off an object in the range of radar system 100, and an echo signal is received on a receiving (Rx) antenna of the radar sensor 102. The Tx and Rx antennas of the radar sensor 102 each have a radiation pattern (which may be identical if the Tx and Rx antennas are implemented by a single antenna) including a main lobe centered on a beam axis of the respective antenna and a number of surrounding side lobes at various angles. This radiation pattern establishes a detection field for the radar sensor 102 to receive echo signals from the surrounding environment. Each radar sensor 102 may be located at various positions on a vehicle and aimed away from the vehicle to receive echo signals from different portions of the surrounding environment. A radar sensor 102 may be located adjacent to another radar sensor 102 and may have detection fields that partially overlap, where such adjacent radar sensors 102 may be also referred to as neighboring radar sensors 102. Each radar sensor 102 may be permanently stationary or may be adjustable to re-direct the detection fields.

The RF front-end block of the radar sensor 102 may also implement a functional evaluation circuit. Since the echo signal is delayed in time as compared with the transmitter output signal, the functional evaluation circuit outputs a signal (also referred to as sensor data) indicating the relationship between the echo signal and the transmitter output signal. This sensor data may be provided by the radar sensor 102 in an on-going or continuous manner. The RF front-end block may also implement an analog-to-digital converter (ADC) to digitize this sensor data signal at a known sample rate. The radar sensor 102 provides this sensor data to its local radar processor 104, which is configured to perform object processing on the sensor data. Object processing may include object detection, object classification, and object tracking. For example, once an object is detected, radar processor 104 is configured to classify or distinguish stationary objects from moving objects. Radar processor 104 performs object tracking on moving objects (e.g., associating each detected moving object with an identification tag), while stationary objects are disregarded.

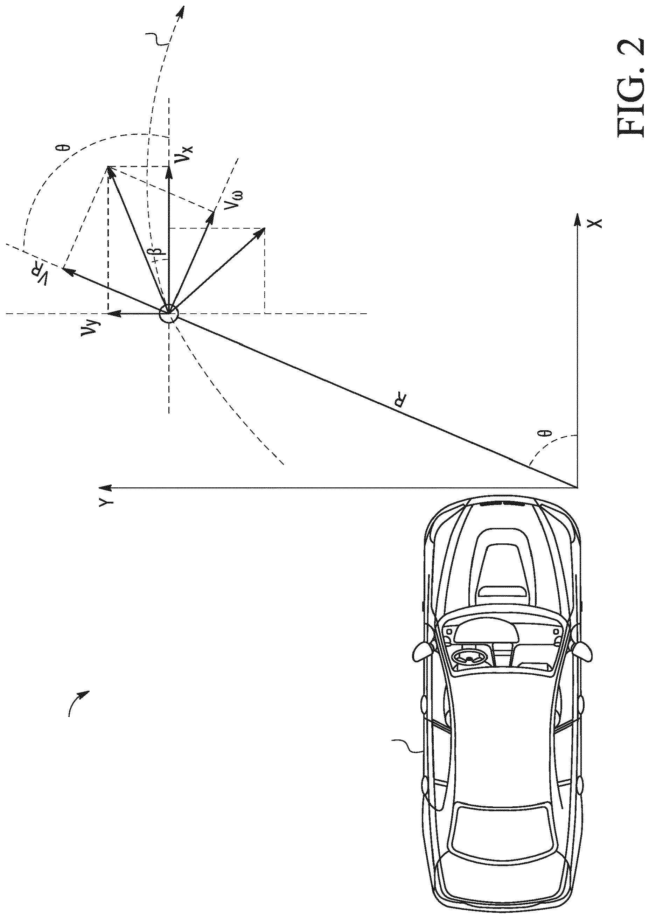

As part of object processing, each radar processor 104 implements a radial velocity calculator 106, which is configured to calculate an instantaneous measurement of a radial velocity component for each sensor data sample. The radial velocity component is a component of the moving object's true velocity vector that is measured in a radial direction toward or away from the radar sensor, where the radial velocity component includes a velocity magnitude and an angle measured from the radar sensor to the moving object, as further discussed in connection with FIG. 2. Depending on the radar signal scheme implemented by the radar sensors (e.g., whether the output signal transmitted by the radar sensors 102 can be used to determine distance), the radar processor 104 may also be configured to determine a distance between the radar sensor 102 and the moving object.

Since the local radar processor 104 is configured to receive sensor data from a single radar sensor 102, the processor 104 is configured to perform object detection independently of the other radar processors 104. Each of the local radar processors 104 are configured to provide information about the detected moving objects to the master radar processor 108 at some known radar frame rate (e.g., 40 to 50 ms) for object tracking, such as providing the instantaneous measurement of the radial velocity component for each moving object, an estimated distance between the vehicle and the moving object, and any identification tags associated with each moving object.

Master radar processor 108 implements radar object tracking logic 112, which is configured to perform object tracking based on the received object information. Since a pair (or more) of neighboring radar sensors 102 may have overlapping detection fields, such a pair of radar sensors 102 may obtain sensor data for a same moving object, where their respective processors 104 have each calculated an instantaneous radial velocity measurement for the same object (e.g., the instantaneous measurements occurred during a single frame). Master radar processor 108 implements true velocity vector calculator 110 (also referred to herein as calculator 110), which uses the two (or more) instantaneous measurements of the radial velocity component to estimate the true velocity vector of the object, as further discussed below. In some embodiments, calculator 110 is implemented, at least in part, as circuitry in the master radar processor 108. In some embodiments, calculator 110 is configured to calculate the true velocity vector within a single frame (e.g., before the next instantaneous measurement is received). The true velocity vector may also be provided to radar object tracking logic 112.

Master radar processor 108 may also implement radar warning logic 114, which is communicatively coupled with radar object tracking logic 112. Based on the moving objects being tracked in the vicinity of the vehicle by radar object tracking logic 112, radar warning logic 114 may determine that a warning should be provided to the driver to alert the driver of dangerous driving conditions. In some embodiments, radar warning logic 114 may also be communicatively coupled to an automotive CPU (central processing unit) 116, which may be implemented using one or more processing units. Radar warning logic 114 may also provide a warning to automotive CPU 116, which controls other ADAS systems to provide immediate driver assistance. For example, radar warning logic 114 may issue a warning to the driver that a collision is imminent so the driver can take appropriate action to avoid the collision, or may issue a warning to a collision avoidance system that assists in braking or steering to avoid the collision, or both. The warning provided to the automotive CPU 116 may also include information associated with the moving object.

It is noted that the true velocity vector estimation solution provided herein is suitable for small object detection, such as for pedestrians, bicycles, small motorized vehicles, and the like, that may have a single detection point detected by the radar sensors 102, as compared with large objects that provide a cluster of detection points detected by the radar sensors. The solution provided herein may be applied to large objects, but may require additional clustering of the detection points to group detection points corresponding to a single large moving object (e.g., rather than several small moving objects).

FIG. 2 shows example radar detection of a target object 204 by a single radar sensor 102. Radar sensor 102 is positioned externally on a vehicle 202, which is near the front of the vehicle on the passenger side in the embodiment shown. Also in the embodiment shown, vehicle 202 is traveling to the right in an environment 200, where the direction of travel of the vehicle is illustrated as the x-axis. The object 204 is also traveling on a trajectory 206 through the environment 200 in the vicinity of the vehicle 202. FIG. 2 shows the object 204 at an example point along the trajectory 206 at a point in time T.

The object 204 has a true velocity vector Vactual, which has a radial velocity component VR, and an angular velocity component Vw that cannot be measured by the radar sensor 102. Radar sensor 102 (in combination with a local radar processor 104) is configured to make an instantaneous measurement of the radial velocity component VR, which is measured in a radial direction toward or away from the radar sensor 102. As shown in FIG. 2, the radial direction is aligned with a radius R measured from the radar sensor 102 to the object 204 (also referred to as a radial axis R). The true velocity vector Vactual is tangential to the trajectory 206 at the point in time T, and a rate of change of the tangential velocity is shown as centripetal acceleration αactual.

Radial velocity component VR can be seen as a vector projection (e.g., an orthogonal projection) of true velocity vector Vactual onto the radial axis R. Using the x-y plane as another frame for context, the true velocity vector Vactual may also be defined as having a first component in the x-direction (e.g., parallel to the direction of travel of the vehicle 202), shown as reference vector Vx, and a second component in the y-direction, shown as reference vector Vy (e.g., perpendicular to the direction of travel of the vehicle 202).

The radar sensor 102 (in combination with the local radar processor 104) is also configured to determine an angle θ measured between the direction of travel (e.g., the x-axis) to the radial axis R of the object 204, which is also referred to as a theta angle. This theta angle is the same angle formed between reference vector Vx (e.g., parallel to the x-axis) and the radial velocity component VR (e.g., parallel to the radial axis R). Another angle β is also shown between the reference vector Vx and the true velocity vector Vactual, also referred to as a beta angle.

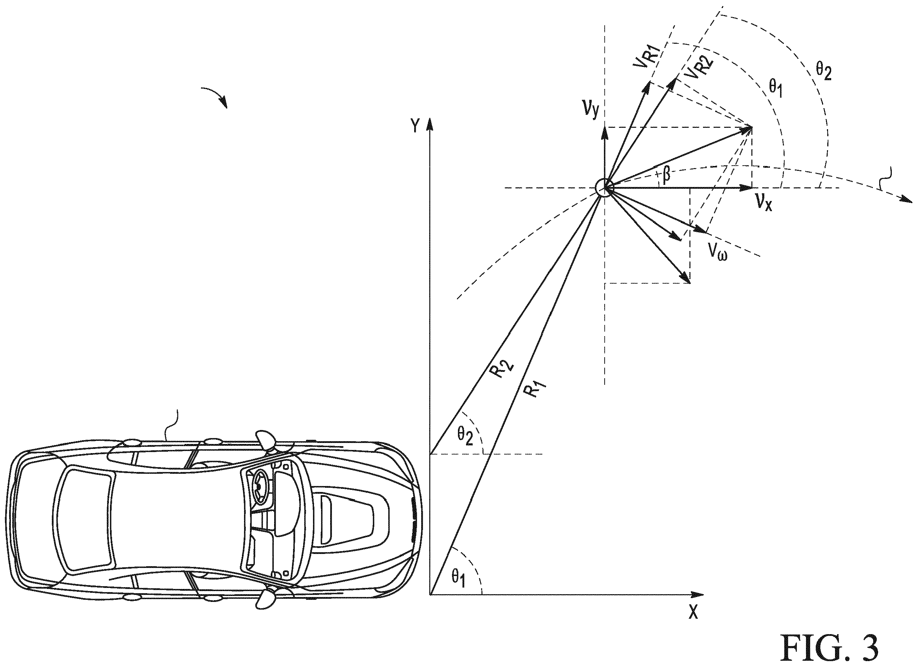

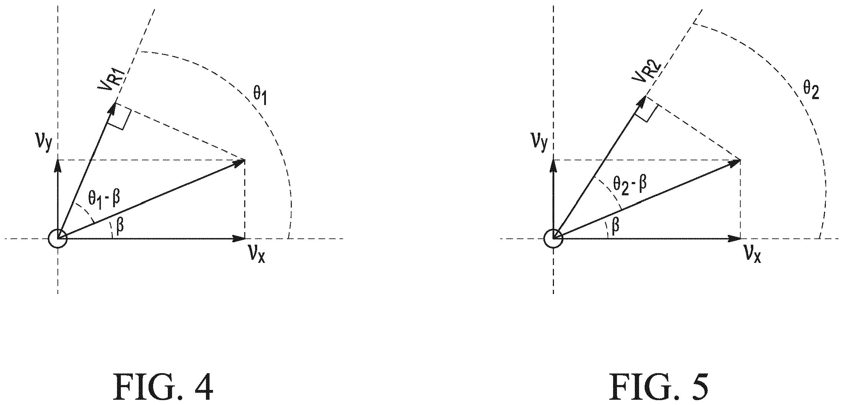

FIG. 3 shows example radar detection of the target object 204 by both radar sensor 102(1) and 102(2) on vehicle 202 in environment 200. Radar sensor 102(1) is positioned near the front of the vehicle 202 on the passenger side (similar to radar sensor 102 in FIG. 2) and radar sensor 102(2) is positioned near the front of the vehicle on the driver side. Since radar sensor 102(2) is laterally offset from radar sensor 102(1) in the y-direction, radar sensor 102(2) has a different theta angle than radar sensor 102(1) and has a different radial distance from the object 204. As shown, radar sensor 102(1) (in combination with a respective processor 104) measures a radial velocity component VR1 along radial axis R1 at a theta angle θ1, and radar sensor 102(2) (in combination with a respective processor 104) measures a radial velocity component VR2 along radial axis R2 at a theta angle θ2. These measurements are made at a same point in time T by the radar sensors 102(1) and 102(2). The relationships among the radial velocity components VR1 and VR2 and the true velocity vector Vactual are shown in additional detail in FIG. 4 and 5.

FIG. 4 shows true velocity vector Vactual, radial velocity component VR1 measured by radar sensor 102(1), and reference vectors Vx and Vy. As used herein, a vector has both a magnitude and an angle of direction. The magnitude can be represented visually by a line or an arrow having a length that corresponds to the magnitude, and is drawn in a direction in which the vector is moving, where the angle of direction can be represented by an angle formed between a reference vector to the arrow. In the embodiment provided herein, a reference line or reference axis is defined as being parallel to the direction of travel of the vehicle 202 (e.g., the x-direction), although another reference line or reference axis may be defined in the alternate (e.g., the y-direction, which is perpendicular to the direction of travel of the vehicle 202), where a trigonometric relationship may be similarly established from any defined reference line or reference axis, as discussed below.

A beta angle β is formed between the reference vector Vx and the true velocity vector Vactual. As noted above, the theta angle θ1 measured between the radar sensor 102(1) and the object 204 is equivalent to the angle formed between the reference vector Vx and radial velocity component VR1, which is also labeled as theta angle θ1. Since radial velocity component VR1 is an orthogonal vector projection of true velocity vector Vactual, a right triangle relationship can be established between VR1 and Vactual, with Vactual as the hypotenuse and VR1 as an adjacent side of the right triangle. A first vertex angle (or alpha angle α1) is formed by VR1 and Vactual at the object 204, which is the difference between theta angle θ1 and beta angle β.

Since a right triangle relationship is established between VR1 and Vactual, Vactual can be expressed as a trigonometric function of VR1 and the first vertex angle α1. For example, a cosine function of the first vertex angle, or cos(α1), is equal to the adjacent side (or VR1) divided by the hypotenuse (or Vactual). Vactual can then be expressed as:

$$Vactual = \frac{VR1}{\cos(\alpha1)} = \frac{VR1}{\cos(\theta1 - \beta)}$$

Expression 1

FIG. 5 shows true velocity vector Vactual, radial velocity component VR2 measured by radar sensor 102(2), and reference vectors Vx and Vy. The beta angle β shown in FIG. 5 is equivalent to the beta angle β shown in FIG. 4, which is formed between the reference vector Vx and the true velocity vector Vactual. As noted above, the theta angle θ2 measured between the radar sensor 102(2) and the object 204 is equivalent to the angle formed between the reference vector Vx and radial velocity component VR2, which is also labeled as theta angle θ2. Since radial velocity component VR2 is an orthogonal vector projection of true velocity vector Vactual, a right triangle relationship can also be established between VR2 and Vactual, with Vactual as the hypotenuse and VR2 as an adjacent side of the right triangle. A second vertex angle (or alpha angle α2) is formed by VR1 and Vactual at the object 204, which is the difference between theta angle θ2 and beta angle β.

Since a right triangle relationship is established between VR2 and Vactual, Vactual can be expressed as a trigonometric function of VR2 and the second vertex angle α2. For example, a cosine function of the second vertex angle, or cos(α2), is equal to the adjacent side (or VR2) divided by the hypotenuse (or Vactual). Vactual can then be expressed as:

$$Vactual = \frac{VR2}{\cos(\alpha2)} = \frac{VR2}{\cos(\theta2 - \beta)}$$

Expression 2

Since Vactual in FIG. 4 is equivalent to Vactual in FIG. 5, the two trigonometric expressions of Vactual can be equated with one another to define a trigonometric relationship between VR1 and VR2:

$$\frac{VR1}{\cos(\theta1 - \beta)} = \frac{VR2}{\cos(\theta2 - \beta)}$$

Expression 3

which can also be expressed as:

$$VR1 \cdot \cos(\theta2 - \beta) = VR2 \cdot \cos(\theta1 - \beta)$$

Expression 4

Trigonometric identities can be used to expand the cosine terms:

$$VR1[\cos(\theta2)\cos(\beta) + \sin(\theta2)\sin(\beta)] = VR2[\cos(\theta1)\cos(\beta) + \sin(\theta1)\sin(\beta)]$$

Expression 5

which can be rewritten using variables a = cos(θ1), b = sin(θ1); c = cos(θ2); and d = sin(θ2) as:

$$VR1[c \cdot \cos(\beta) + d \cdot \sin(\beta)] = VR2[a \cdot \cos(\beta) + b \cdot \sin(\beta)$$

Expression 6

which can also be factored and written as:

$$(c \cdot VR1 - a \cdot VR2)\cos(\beta) = (b \cdot VR2 - d \cdot VR1)\sin(\beta)$$

Expression 7

which can be expressed as a tangent function of the beta angle ($\beta$):

$$\tan(\beta) = \frac{c \cdot VR1 - a \cdot VR2}{b \cdot VR2 - d \cdot VR1}$$

Expression 8

Since variables a, b, c, and d are known (based on the known theta angles $\theta1$ and $\theta2$) and radial velocity magnitudes VR1 and VR2 are known, the beta angle can be calculated as the inverse tangent function (or arctan) of trigonometric expression 8. In some embodiments, this trigonometric expression may be predefined or preprogrammed in true velocity vector calculator 110, which is configured to calculate the beta angle according to this trigonometric expression, using the instantaneous measurements of radial velocity components VR1 and VR2. Once the beta angle is determined, the respective vertex angle $\alpha$ can be determined, which is used to calculate Vactual. The beta angle can be substituted back into either trigonometric expression 1 or trigonometric expression 2 above to determine the magnitude of the true velocity vector Vactual. In some embodiments, trigonometric expression 1, trigonometric expression 2, or both may be predefined or preprogrammed in true velocity vector calculator 110, which is configured to calculate the magnitude of Vactual according to either trigonometric expression 1 or 2 using the calculated beta angle. In this manner, calculator 110 is configured to determine the magnitude and angle (or beta angle that is determined from the direction of travel of the vehicle 202) of a true velocity vector Vactual for the object 204, which can be used to accurately track the object 204.

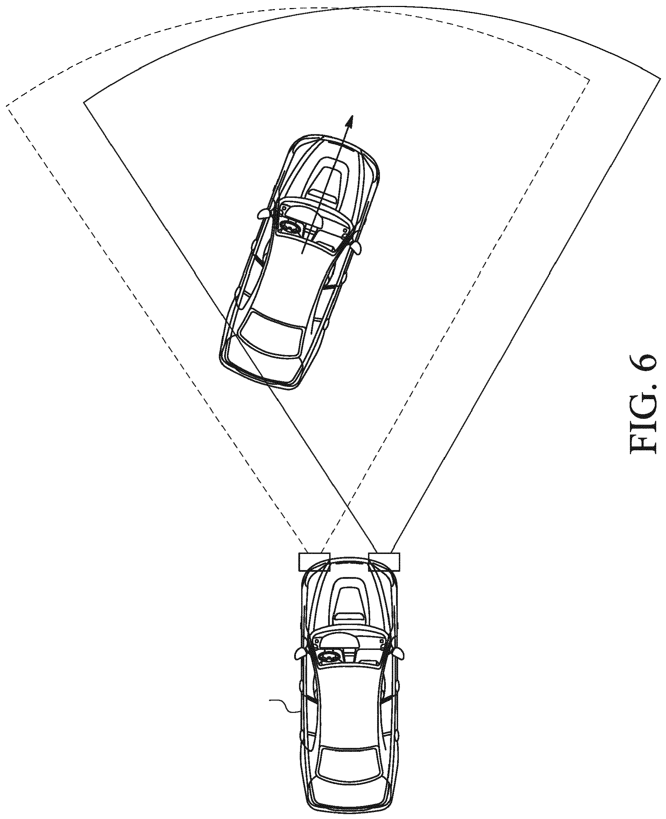

It is noted that the calculations performed by true velocity vector calculator 110 rely on two radial velocity component measurements taken by two radar sensors 102 in different locations on the vehicle 202 for a same object 204, such as another vehicle. As shown in FIG. 6, two neighboring radar sensors 102(1) and 102(2) are arranged at the front of the vehicle 202. Each radar sensor 102 has a detection field aimed away from the vehicle 202 for detecting objects. The detection fields of radar sensors 102(1) and 102(2) have at least a portion of the detection fields overlapping, where the object 204 falls within the overlapping portion. Both radar sensors 102(1) and 102(2) measure a radial velocity component for the object 204 at a same time (or at substantially at the same time), which are used to calculate Vactual based on the trigonometric relationship established between the radial velocity components, as discussed above.

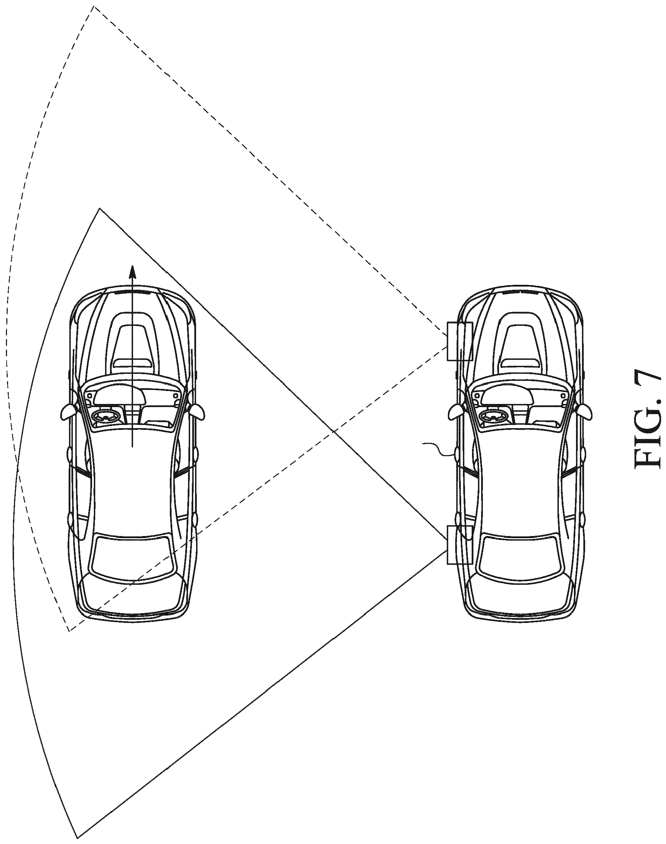

FIG. 7 shows another arrangement of radar sensors 102(1) and 102(2) on a driver side of the vehicle. The arrangements shown in FIG. 6 and 7 are merely examples, and the pair of radar sensors 102(1) and 102(2) may be arranged in a variety of different locations on the vehicle. Object 204 is shown in an overlapping portion of the detection fields of the pair of radar sensors 102(1) and 102(2) and is traveling to the right in a same direction as the vehicle 202. It is noted that conventional radar systems implementing temporal filters often have a difficult time determining the velocity in a scenario like that shown in FIG. 7 because the radial velocity component, which is orthogonal to the direction of travel of the vehicle 202, may have a very small or close to 0 magnitude and may require a much longer time period to combine enough measurements to interpolate a velocity measurement, which may still be very inaccurate. Having two radar sensors spaced apart to provide sufficiently different theta angles to a target object, which provides sufficiently different radial velocities of the target object, should provide enough information to more accurately estimate the true velocity vector of the target object.

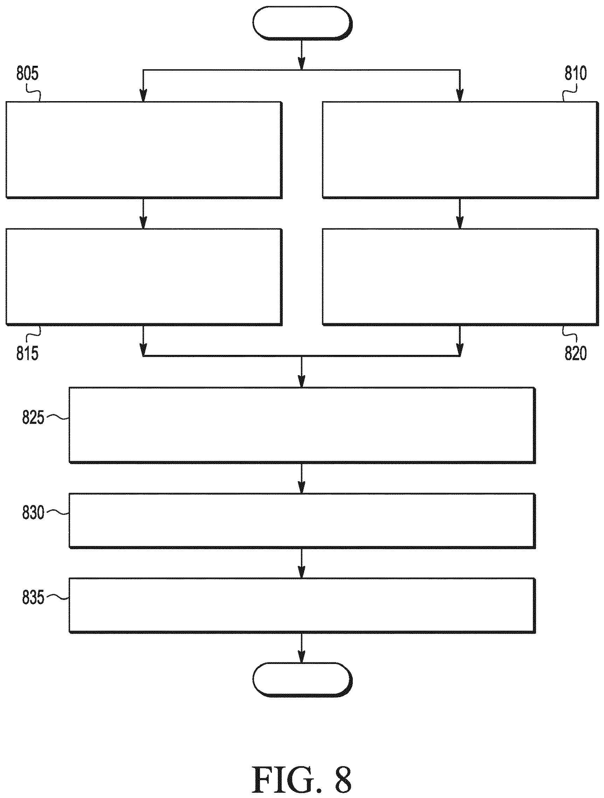

FIG. 8 is a flowchart diagram depicting an example process for determining a true velocity vector of a target object, which may be implemented by true velocity vector calculator 110. The process begins at operation 805, where calculator 110 obtains a first radial velocity component that includes a magnitude VR1 and a first theta angle T1 (or $\theta1$) that correspond to a target object. As discussed above, the first radial velocity component is calculated by a first local radar processor 104 based on sensor data obtained by a first radar sensor 102 from a first detection field. The first radial velocity component is provided to calculator 110, which may be implemented by master radar processor 108. Concurrently with operation 805, the process performs operation 810, where calculator 110 obtains a second radial velocity component that includes a magnitude VR2 and a second theta angle T2 (or $\theta2$) that corresponds to the (same) target object. As discussed above, the second radial velocity component is calculated by a second local radar processor 104 based on sensor data obtained by a second radar sensor 102 from a second detection field, where the target object is located in an overlapping portion of the first and second detection fields. Operations 805 and 810 may be performed concurrently (e.g., the first and second radial velocity components for the same target object are obtained during a same radar frame) on an on-going basis (e.g., the radar sensors 102 continuously provide radar data to processors 104, which continuously provide radial velocity components to the calculator 110).

The process continues to operation 815, where calculator 110 establishes a first right triangle relationship between velocity vector Vactual and the first radial velocity component, as discussed above in connection with FIG. 4. Concurrently with operation 815, the process continues to operation 820, where calculator 110 establishes a second right triangle relationship between velocity vector Vactual and the second radial velocity component, as discussed above in connection with FIG. 5. Operations 815 and 820 may be performed concurrently (e.g., the right triangle relationships are established at a same point in time). From operations 815 and 820, the process continues to operation 825, where calculator 110 establishes a trigonometric relationship between the first and second radial velocity components based on the first and second right triangle relationships, as also discussed above. Although operations 815, 820, and 825 are shown as being performed each time a velocity vector needs to be determined, the relationships of operations 815, 820, and 825 may instead be predefined for the calculator 110 (e.g., at a factory install or some time before runtime operation of the calculator 110), where operations 815, 820, and 825 are omitted from the process performed by calculator 110 at runtime.

The process continues to operation 830, where calculator 110 determines a beta angle β that corresponds to the true velocity vector Vactual, based on the trigonometric relationship, as discussed above. The process then continues to operation 835, where calculator 110 calculates the velocity vector Vactual based on the beta angle calculated in operation 830, as discussed above. The process then ends.

FIG. 9 shows relevant components of an example computing device 900 that may be used to implement functionality of a master radar processor 108, which includes velocity vector calculator 110. In some embodiments, computing device 900 is used to implement the functionality of the master radar processor 108, as well as the functionality of one or more local radar processors 104 including the instantaneous velocity calculator 106. Computing device 900 includes at least one processing unit or processor 902, associated memory 906 and 908, and one or more input/output (I/O) ports 904, which are coupled to one another to send and receive data and control signals via one or more buses or other interconnects. Computing device 900 is communicatively coupled to other computing devices (e.g., one or more local radar processors 104, a radar sensor 102, or both) by the one or more ports 904, which may be hardware ports or other network interfaces that can be linked to the other computing devices, such as by a wired or wireless connection via the I/O port 904. Computing device 900 receives data from the other computing devices, such as radial velocity data 912 and theta angle data 914, which is stored in associated memory 908. In some embodiments, memory 908 may also store radar data received from a radar sensor and memory 906 may implement instantaneous velocity calculator logic to calculate an instantaneous velocity component that is provided directly to velocity vector calculator logic 910 (e.g., in embodiments where computing device 900 implements both local radar and master radar processor functionality).

The processor 902 is configured to process data 912 and 914 according to logic 910 stored in memory 906 that implements the functionality of the velocity vector calculator 110. Memory 906 may similarly store logic that implements the functionality of radar object tracking logic 112 and radar warning logic 114, shown in FIG. 1. Processor 902 may produce output information based on data 912 and 914, such as velocity vector data, which may be provided to radar object tracking logic 112 that uses the velocity vector data for object detection, classification, and tracking. Radar object tracking logic 112 may also provide information to radar warning logic 114, such as for collision avoidance. Radar warning logic 114 may also provide information to an automotive CPU 116, as discussed above.

In some embodiments, logic 910 is a list of instructions such as a particular application program, an operating system, or both, which is typically stored internally on computer readable storage medium of the computing device. Examples of a computing device 900 include but are not limited to a mainframe, a server, a workstation, a personal computer, a minicomputer, and the like. Examples of a processor 902 include but are not limited to microprocessors, PLDs (Programmable Logic Devices), or ASICs (Application Specific Integrated Circuits)) configured to execute instructions stored in the local memory. Examples of memory 906 or memory 908 include but are not limited to various types of computer readable media such as volatile storage media including registers, buffers or caches, main memory, RAM (Random Access Memory), ROM (Read Only Memory); nonvolatile memory storage media including semiconductor-based memory units such as FLASH memory, EEPROM, EPROM, ROM; magnetic storage media including disk and tape storage media; optical storage media such as compact disk media (e.g., CD ROM, CD R, etc.) and digital versatile disk (DVD) storage media; ferromagnetic digital memories; MRAM; and data transmission media including computer networks, point-to-point telecommunication equipment, and carrier wave transmission media, just to name a few. Computer readable storage media may be permanently, removably or remotely coupled to the computing device 900.

The circuitry described herein may be implemented on a semiconductor substrate, which can be any semiconductor material or combinations of materials, such as gallium arsenide, silicon germanium, silicon-on-insulator (SOI), silicon, monocrystalline silicon, the like, and combinations of the above.

As used herein, a "node" means any internal or external reference point, connection point, junction, signal line, conductive element, or the like, at which a given signal, logic level, voltage, data pattern, current, or quantity is present.

Furthermore, two or more nodes may be realized by one physical element (and two or more signals can be multiplexed, modulated, or otherwise distinguished even though received or output at a common mode).

The following description refers to nodes or features being "connected" or "coupled" together. As used herein, unless expressly stated otherwise, "coupled" means that one node or feature is directly or indirectly joined to (or is in direct or indirect communication with) another node or feature, and not necessarily physically. As used herein, unless expressly stated otherwise, "connected" means that one node or feature is directly joined to (or is in direct communication with) another node of feature. For example, a switch may be "coupled to a plurality of nodes, but all of those nodes need not always be "connected" to each other; the switch may connect different nodes to each other depending upon the state of the switch. Furthermore, although the various schematics shown herein depict certain example arrangements of elements, additional intervening elements, devices, features, or components may be present in an actual embodiment (assuming that the functionality of the given circuit is not adversely affected).

By now it should be appreciated that there has been provided a real-time true velocity vector estimation solution in an RF radar system, which calculates a magnitude and angle of a true velocity vector of an object within a single radar frame using two or more radar sensors. The present disclosure improves upon the technological field of radar detection by providing a novel approach for calculating true velocity in a more accurate manner and in less time (e.g., within a single radar frame) than it takes conventional temporal regression analysis techniques (e.g., multiple radar frames). The present disclosure also provides technological improvement of the capabilities of the existing radar sensor hardware and radar processors implemented in a radar system, where the novel approach for calculating true velocity enables existing radar sensor hardware and radar processors to achieve faster object velocity detection than previously available.

In one embodiment of the present disclosure, a method for determining true velocity in a radar system is provided, which includes: obtaining a first radial velocity component that corresponds to a target object, based on sensor data detected by a first radar sensor on a vehicle; obtaining a second radial velocity component that corresponds to the target object, based on sensor data detected by a second radar sensor on the vehicle; and calculating a true velocity vector of the target object based on a trigonometric relationship established between the first radial velocity component and the second radial velocity component.

One aspect of the above embodiment provides that the first radial velocity component is a vector projection of the true velocity vector on a first radial axis, the first radial axis being a straight line extending from the first radar sensor through the target object; and the second radial velocity component is a vector projection of the true velocity vector on a second radial axis, the second radial axis being a straight line extending from the second radar sensor through the target object.

A further aspect of the above embodiment provides that the first radial velocity component includes a first radial velocity magnitude and a first theta angle, wherein the first theta angle is formed between a reference axis parallel to a direction of travel of the vehicle and the first radial axis, and the second radial velocity component includes a second radial velocity magnitude and a second theta angle, wherein the second theta angle is formed between the reference axis and the second radial axis.

Another further aspect of the above embodiment provides that the method further includes: establishing a first right triangle relationship between the true velocity vector as a hypotenuse and the first radial velocity component as an adjacent side, which form a first vertex angle at the target object; and establishing a second right triangle relationship between the true velocity vector as a hypotenuse and the second radial velocity component as an adjacent side, which form a second vertex angle at the target object, wherein the trigonometric relationship is based on the first and second right triangle relationships.

Another further aspect of the above embodiment provides that the method further includes: defining a magnitude of the true velocity vector as a first trigonometric expression equal to the first radial velocity magnitude divided by a cosine function of the first vertex angle; defining the magnitude of the true velocity vector as a second trigonometric expression equal to the second radial velocity magnitude divided by a cosine function of the second vertex angle; and equating the first trigonometric expression with the second trigonometric expression to result in the trigonometric relationship.

Another further aspect of the above embodiment provides that the method further includes: calculating a beta angle based on the trigonometric relationship, wherein the beta angle is formed between the reference axis and the true velocity vector.

Another further aspect of the above embodiment provides that the beta angle is equal to an inverse tangent function of an operand consisting of: a first cosine term minus a second cosine term in a numerator of the operand, and a first sine term minus a second sine term in a denominator of the operand, wherein the first cosine term consists of the first radial velocity magnitude multiplied by a cosine function of the second theta angle, the second cosine term consists of the second radial velocity magnitude multiplied by a cosine function of the first theta angle, the first sine term consists of the second radial velocity magnitude multiplied by a sine function of the first theta angle, and the second sine term consists of the first radial velocity magnitude multiplied by a sine function of the second theta angle.

Another further aspect of the above embodiment provides that the calculating the true velocity vector includes:

calculating a magnitude of the true velocity vector by using the beta angle in one of the first trigonometric expression or the second trigonometric expression, wherein the first vertex angle is equal to the first theta angle minus the beta angle, and the second vertex angle is equal to the second theta angle minus the beta angle.

Another aspect of the above embodiment provides that the first radar sensor is configured to obtain sensor data from a first detection field, the second radar sensor is configured to obtain sensor data from a second detection field, the first and second detection fields have a partially overlapping region, and the target object is located in the partially overlapping region.

Another aspect of the above embodiment provide that the true velocity vector is calculated in a single radar frame.

In another embodiment of the present disclosure, a radar system is provided, which includes: a first radar sensor on a vehicle; a first radar processor coupled to the first radar sensor, the first radar processor configured to determine a first radial velocity component that corresponds to a target object, based on sensor data detected by the first radar sensor; a second radar sensor on the vehicle; a second radar processor coupled to the second radar sensor, the second radar processor configured to determine a second radial velocity component that corresponds to the target object, based on sensor data detected by the second radar sensor; and a true velocity vector calculator configured to: receive the first and second radial velocity components, and calculate a true velocity vector of the target object based on a trigonometric relationship established between the first radial velocity component and the second radial velocity component.

One aspect of the above embodiment provides that the first radial velocity component is a vector projection of the true velocity vector on a first radial axis, the first radial axis being a straight line extending from the first radar sensor through the target object; and the second radial velocity component is a vector projection of the true velocity vector on a second radial axis, the second radial axis being a straight line extending from the second radar sensor through the target object.

A further aspect of the above embodiment provides that the first radial velocity component includes a first radial velocity magnitude and a first theta angle, wherein the first theta angle is formed between a reference axis parallel to a direction of travel of the vehicle and the first radial axis, and the second radial velocity component includes a second radial velocity magnitude and a second theta angle, wherein the second theta angle is formed between the reference axis and the second radial axis.

Another further aspect of the above embodiment provides that the true velocity vector calculator is further configured to: calculate a beta angle as a function of the first and second velocity magnitudes and the first and second theta angles, based on the trigonometric relationship, wherein the beta angle is formed between the reference axis and the true velocity vector.

Another further aspect of the above embodiment provides that the true velocity vector calculator is further configured to: calculate a magnitude of the true velocity vector as a function of the beta angle, based on the trigonometric relationship.

Another further aspect of the above embodiment provides that a first vertex angle of a first right triangle is formed at the target object by the true velocity vector as a hypotenuse and the first radial velocity component as an adjacent side, and a second vertex angle of a second right triangle is formed at the target object by the true velocity vector as a hypotenuse and the second radial velocity component as an adjacent side.

Another further aspect of the above embodiment provides that the true velocity vector calculator is further configured to: define a magnitude of the true velocity vector as a first trigonometric expression equal to the first radial velocity magnitude divided by a cosine function of the first vertex angle, define a magnitude of the true velocity vector as a second trigonometric expression equal to the second radial velocity magnitude divided by a cosine function of the second vertex angle, and establish the trigonometric relationship as the first trigonometric expression equated with the second trigonometric expression.

Another further aspect of the above embodiment provides that the true velocity vector calculator is further configured to: implement a beta angle calculation equal to an inverse tangent function of an operand consisting of: a first cosine term minus a second cosine term in a numerator of the operand, and a first sine term minus a second sine term in a denominator of the operand, wherein the first cosine term consists of the first radial velocity magnitude multiplied by a cosine function of the second theta angle, the second cosine term consists of the second radial velocity magnitude multiplied by a cosine function of the first theta angle, the first sine term consists of the second radial velocity magnitude multiplied by a sine function of the first theta angle, and the second sine term consists of the first radial velocity magnitude multiplied by a sine function of the second theta angle.

Another further aspect of the above embodiment provides that the true velocity vector calculator is further configured to: calculate a magnitude of the true velocity vector by using the beta angle calculation in one of the first and second trigonometric expressions, the first vertex angle is equal to the first theta angle minus the beta angle calculation, and the second vertex angle is equal to the second theta angle minus the beta angle calculation.

Another aspect of the above embodiment provides that the first radar sensor is configured to obtain sensor data from a first detection field, the second radar sensor is configured to obtain sensor data from a second detection field, the first and second detection fields have a partially overlapping region, and the target object is located in the partially overlapping region.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Moreover, the terms "front," "back," "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

As used herein, the terms "substantial" and "substantially" mean sufficient to achieve the stated purpose or value in a practical manner, taking into account any minor imperfections or deviations, if any, that arise from usual and expected abnormalities that may occur during radar operation, which are not significant for the stated purpose or value.

Although the invention is described herein with reference to specific embodiments, various modifications and changes can be made without departing from the scope of the present invention as set forth in the claims below. For example, additional or fewer radar sensors may be implemented in FIG. 1. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

**Claims**

1. A method for determining true velocity in a radar system (100), the method comprising:

   obtaining (805) a first radial velocity component (VR1) that corresponds to a target object (204), based on sensor data detected by a first radar sensor (102(1)) on a vehicle (202);
   obtaining (810) a second radial velocity component (VR2) that corresponds to the target object (204), based on sensor data detected by a second radar sensor (102(2)) on the vehicle (202); and
   calculating (835) a true velocity vector (Vactual) of the target object (204) based on a trigonometric relationship established between the first radial velocity component (VR1) and the second radial velocity component (VR2).

2. The method of claim 1, wherein
   the first radial velocity component (VR1) is a vector projection of the true velocity vector (Vactual) on a first radial axis (R1), the first radial axis (R1) being a straight line extending from the first radar sensor (102(1)) through the target object (204); and
   the second radial velocity component (VR2) is a vector projection of the true velocity vector (Vactual) on a second radial axis (R2), the second radial axis (R2) being a straight line extending from the second radar sensor (102(2)) through the target object (204).

3. The method of claim 2, wherein
   the first radial velocity component (VR1) comprises a first radial velocity magnitude and a first theta angle ($\theta$1), wherein the first theta angle ($\theta$1) is formed between a reference axis (Vx) parallel to a direction of travel of the vehicle (202) and the first radial axis (R1), and
   the second radial velocity component (VR2) comprises a second radial velocity magnitude and a second theta angle ($\theta$2), wherein the second theta angle ($\theta$2) is formed between the reference axis (Vx) and the second radial axis (R2).

**4.** The method of claim 3, further comprising:

establishing (815) a first right triangle relationship between the true velocity vector (Vactual) as a hypotenuse and the first radial velocity component (VR1) as an adjacent side, which form a first vertex angle ($\alpha$1) at the target object (204); and
establishing (820) a second right triangle relationship between the true velocity vector (Vactual) as a hypotenuse and the second radial velocity component (VR2) as an adjacent side, which form a second vertex angle ($\alpha$2) at the target object (204), wherein

the trigonometric relationship is based on the first and second right triangle relationships.

**5.** The method of claim 4, further comprising:

defining a magnitude of the true velocity vector (Vactual) as a first trigonometric expression equal to the first radial velocity magnitude (VR1) divided by a cosine function of the first vertex angle ($\cos(\theta1-\beta)$);
defining the magnitude of the true velocity vector (Vactual) as a second trigonometric expression equal to the second radial velocity magnitude (VR2) divided by a cosine function of the second vertex angle ($\cos(\theta2-\beta)$); and
equating (825) the first trigonometric expression with the second trigonometric expression to result in the trigonometric relationship.

**6.** The method of claim 5, further comprising:

calculating (830) a beta angle ($\beta$) based on the trigonometric relationship, wherein the beta angle ($\beta$) is formed between the reference axis (Vx) and the true velocity vector (Vactual).

**7.** The method of claim 6, wherein
the beta angle ($\beta$) is equal to an inverse tangent function of an operand consisting of:

a first cosine term minus a second cosine term in a numerator of the operand,
and a first sine term minus a second sine term in a denominator of the operand, wherein
the first cosine term consists of the first radial velocity magnitude multiplied by a cosine function of the second theta angle ($\theta2$),
the second cosine term consists of the second radial velocity magnitude multiplied by a cosine function of the first theta angle ($\theta1$),
the first sine term consists of the second radial velocity magnitude multiplied by a sine function of the first theta angle ($\theta1$), and
the second sine term consists of the first radial velocity magnitude multiplied by a sine function of the second theta angle ($\theta2$).

**8.** The method of claim 6 or claim 7, wherein
the calculating (835) the true velocity vector (Vactual) comprises:
calculating a magnitude of the true velocity vector (Vactual) by using the beta angle ($\beta$) in one of the first trigonometric expression or the second trigonometric expression, wherein

the first vertex angle ($\alpha$1) is equal to the first theta angle ($\theta1$) minus the beta angle ($\beta$), and
the second vertex angle ($\alpha$2) is equal to the second theta angle ($\theta2$) minus the beta angle ($\beta$).

**9.** The method of any preceding claim, wherein
the first radar sensor (102(1)) is configured to obtain sensor data from a first detection field,
the second radar sensor (102(2)) is configured to obtain sensor data from a second detection field,
the first and second detection fields have a partially overlapping region, and
the target object (204) is located in the partially overlapping region.

**10.** The method of any preceding claim, wherein
the true velocity vector (Vactual) is calculated in a single radar frame.

**11.** A radar system (100) comprising:

a first radar sensor (102(1)) on a vehicle (202);
a first radar processor (104(1)) coupled to the first radar sensor (102(1)), the first radar processor (104(1)) configured to determine a first radial velocity component (VR1) that corresponds to a target object (204), based on sensor data detected by the first radar sensor (102(1));
a second radar sensor (102(2)) on the vehicle (202);
a second radar processor (104(2)) coupled to the second radar sensor (102(2)), the second radar processor (104(2)) configured to determine a second radial velocity component (VR2) that corresponds to the target object (204), based on sensor data detected by the second radar sensor (102(2)); and
a true velocity vector calculator (110) configured to:

receive the first and second radial velocity components (VR1, VR2), and
calculate a true velocity vector (Vactual) of the target object (204) based on a trigonometric relationship established between the first radial velocity component (VR1) and the second radial velocity component (VR2).

12. The radar system of claim 11, wherein
the first radial velocity component (VR1) is a vector projection of the true velocity vector (Vactual) on a first radial axis (R1), the first radial axis (R1) being a straight line extending from the first radar sensor (102(1)) through the target object (204); and
the second radial velocity component (VR2) is a vector projection of the true velocity vector (Vactual) on a second radial axis (R2), the second radial axis (R2) being a straight line extending from the second radar sensor (102(2)) through the target object (204).

13. The radar system of claim 12, wherein
the first radial velocity component (VR1) comprises a first radial velocity magnitude and a first theta angle ($\theta 1$), wherein the first theta angle ($\theta 1$) is formed between a reference axis (Vx) parallel to a direction of travel of the vehicle (202) and the first radial axis (R1), and
the second radial velocity component (VR2) comprises a second radial velocity magnitude and a second theta angle ($\theta 2$), wherein the second theta angle ($\theta 2$) is formed between the reference axis (Vx) and the second radial axis (R2).

14. The radar system of claim 13, wherein
the true velocity vector calculator (110) is further configured to:

calculate a beta angle ($\beta$) as a function of the first and second velocity magnitudes and the first and second theta angles ($\theta 1$, $\theta 2$), based on the trigonometric relationship, wherein

the beta angle ($\beta$) is formed between the reference axis (Vx) and the true velocity vector (Vactual).

15. The radar system of claim 14, wherein
the true velocity vector calculator (110) is further configured to:

calculate a magnitude of the true velocity vector (Vactual) as a function of the beta angle ($\beta$), based on the trigonometric relationship.

100

102 ... 102

104 106 ... 104 106

108 110

112 114

116

FIG. 1

FIG. 2

FIG. 3

EP 3 502 737 A1

FIG. 5

FIG. 4

FIG. 6

FIG. 7

FIG. 8

FIG. 9

Europäisches
Patentamt

European
Patent Office

Office européen
des brevets

# EUROPEAN SEARCH REPORT

Application Number

EP 18 21 1311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/157314 A1 (JORDAN RUEDIGER [DE] ET AL) 18 June 2009 (2009-06-18) * paragraphs [0001], [0003], [0006], [0009] - [0013], [0018], [0020], [0025] - [0042], [0046]; figures 1-3 * ----- | 1-15 | INV. G01S13/58 G01S13/87 G01S13/93 |
| X | JP 2009 041981 A (NISSAN MOTOR) 26 February 2009 (2009-02-26) * paragraphs [0022] - [0032]; figures 2, 5-9 * ----- | 1-15 | |

TECHNICAL FIELDS
SEARCHED      (IPC)

G01S

The present search report has been drawn up for all claims

| Place of search | Date of completion of the search | Examiner |
|---|---|---|
| Munich | 26 April 2019 | Schmelz, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................

& : member of the same patent family, corresponding
    document

EPO FORM 1503 03.82 (P04C01)

EP 3 502 737 A1

**ANNEX TO THE EUROPEAN SEARCH REPORT
ON EUROPEAN PATENT APPLICATION NO.**                    EP 18 21 1311

This annex lists the patent family members relating to the patent documents cited in  the above-mentioned European search report.
The members are as contained in the European Patent Office EDP file on
The European Patent Office is in no way liable for these particulars which are merely given for the purpose of information.

26-04-2019

| Patent document cited in search report | Publication date | Patent family member(s) | Publication date |
|---|---|---|---|
| US 2009157314 A1 | 18-06-2009 | DE 102007058242 A1<br>EP    2068173 A1<br>US   2009157314 A1 | 10-06-2009<br>10-06-2009<br>18-06-2009 |
| JP 2009041981 A | 26-02-2009 | NONE | |

EPO FORM P0459

For more details about this annex : see Official Journal of the European Patent Office, No. 12/82

23